# EUROPEAN PATENT SPECIFICATION

(11) **EP 2 567 996 B1**
(45) Date of publication and mention of the grant of the patent: **12.03.2014**
(21) Application number: 11007273.3
(22) Date of filing: 07.09.2011
(51) Int. Cl.: C08G 18/68, C08G 18/79, C09J 175/06, C08G 63/553, C09J 167/08, C09J 177/08, C09J 167/06, C08L 79/08

(54) **Polycondensate-based pressure-sensitive adhesive containing furan moieties**
Haftklebstoff auf Polykondensatbasis, der Furan-Einheiten enthält
Adhésif sensible à la pression à base de polycondensat contenant des groupes caractéristiques de furanne

(43) Date of publication of application: 13.03.2013
(73) Proprietor: NITTO EUROPE N.V, 3600 Genk (BE); Nitto Denko Corporation, Ibaraki-shi Osaka 567-8680 (JP)
(72) Inventor: Gomes, Monica, 3500 Hasselt (BE); Vendamme, Richard, 3500 Hasselt (BE); Eevers, Walter, 3520 Zonhoven (BE)
(74) Representative: Grünecker, Kinkeldey, Stockmair & Schwanhäusser

(56) References cited:
- EP-A1- 2 290 000
- EP-A1- 2 311 896
- WO-A1-2009/135921

## Description

The present invention is directed to a polycondensate-based pressure-sensitive adhesive containing furan moieties.

Adhesives are compounds in a liquid or semi-liquid state that can adhere or bond items together. Adhesives are usually derived from fossil fuel, i.e. non-renewable resources. Because of rising oil prices and environmental concerns, there is an increased demand for bio-based materials. Bio-based materials prepared by the polycondensation of plant-derived dicarboxylic acids and plant-derived diols have been employed in adhesive products because of their good technical properties and their sustainability as a renewable resource. However, in view of practical applications, the visco-elastic properties of these polymers need to be optimized by a cross-linking treatment. This cross-linking step is generally performed by treating the polycondensate with an agent having at least 2 functional groups capable of reacting with the polycondensate.

WO-2009/135921-A1 discloses aliphatic-aromatic biodegradable polyesters obtained from aliphatic dicarboxylic acids, aromatic dicarboxylic acids of renewable origin such as 2,5-furandicarboxylic acid, and also blends of said polyesters with other biodegradable polymers of either natural or synthetic origin.

WO-2004/056901-A1 discloses an adhesive comprising polyisocyanate and a polyol comprising at least one dimer fatty acid and/or dimer fatty diol and the use as wood adhesive.

JP-2008-195819 discloses a polyester-based self-adhesive composition containing a chain-extended polyester that is produced by chain extending the polyester consisting of a dicarboxylic acid and diol by an isocyanate compound. The polyester-based self-adhesive can be prepared with a dicarboxylic acid and a diol, which both originate from plants. Among them, the plant-derived dicarboxylic acid may be a dimer acid and the plant-derived diol may be a dimer diol.

EP-A-2311896 discloses a pressure-sensitive adhesive composition comprising a polyester, wherein the polyester comprises at least a lactic acid unit, a dibasic acid unit and a glycol unit.

EP-A-2290000 discloses a bio-based adhesive composition comprising a polycondensate of a dimer of a fatty alcohol and a dimer of a fatty acid, and an epoxidized fatty acid ester as a cross-linking agent.

The problem underlying the present invention is to provide an adhesive having good adhesion and cohesion, as well as high biodegradability.

Said problem is solved by a pressure sensitive adhesive obtainable by reacting
a) a polycondensate obtainable from
   a1) a furan derivative of the following formula (I) 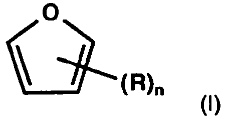 wherein
      R is -(R₁)ₓ-(R₂)_{y}-R₃,
      each R₁ is independently C₁₋₈alkyl, C₂₋₈alkenyl or C₂₋₈alkynyl,
      each R₂ isindependently 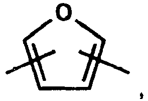
      each R₃ is independently OH, NH₂, COOH or COOR₄,
         wherein R₄ is C₁₋₈alkyl, C₂₋₈alkenyl or C₂₋₈alkynyl,
      n is 1, 2 or 3,
      each x is independently 0 or 1, and
      each y is independently 0 or 1; and
   a2) a dimer of a fatty alcohol, a dimer of a fatty acid and/or ester thereof, a dimer of a fatty amine, and/or a dimer of a fatty isocyanate;
   wherein the polycondensate has a Tg between -50°C and 0°C; and
b) a cross-linking agent having at least 2 functional groups per molecule.

In a preferred embodiment in combination with any of the above or below embodiments, adhesive is bio-based. The term "bio-based" as used herein requires at least 70% of "renewable" carbon according to ASTM 6866-08.

In a preferred embodiment in combination with any of the above or below embodiments, the furan derivative of formula (I) has the following structure of formula (II)

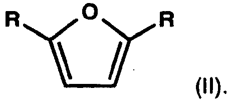

In a preferred embodiment in combination with any of the above or below embodiments, the furan derivative of formula (II) is a 2,5-furandicarboxylic acid dialkyl ester, 2,5-furandicarboxylic acid, 2,5-bis(hydroxy-methyl)furan, 2,5-bis(aminomethyl)furan, 5-hydroxymethyl furoic acid, and/or 2-aminoethyl-5-hydroxy-methyl furan. In another preferred embodiment in combination with any of the above or below embodiments, the 2,5-furandicarboxylic acid dialkyl ester is 2,5-furandicarboxylic acid dimethyl ester or 2,5-furandicarboxylic acid diethyl ester.

Furanic derivatives are commercially available. For instance, 2,5-furandicarboxylic acid dimethyl ester, 2,5-furandicarboxylic acid, 2,5-bis(hydroxy-methyl)furan, 2,5-bis(aminomethyl)furan, 5-hydroxymethyl furoic acid, and/or 2-aminoethyl-5-hydroxy-methyl furan can all be obtained from Satachem (Shangai, China). Furan-based monomers such as 2,5-furandicarboxylic acid are also available under the trade name "YXY" from Avantium (Amsterdam, the Netherlands).

In a preferred embodiment in combination with any of the above or below embodiments, component a1) is present in a concentration of 1 wt% to 50 wt%, more preferably 5 wt% to 35 wt%, in particular 10 wt% to 25 wt%, relative to the polycondensate a).

In a preferred embodiment in combination with any of the above or below embodiments, the fatty alcohol has from 14 to 22 carbon atoms, i.e. 14, 15, 16, 17, 18, 19, 20, 21 or 22 carbon atoms. The term "dimer of a fatty alcohol" as used herein refers to the dimerisation product of mono- or polyunsaturated fatty alcohols.

In another preferred embodiment in combination with any of the above or below embodiments, the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty alcohol are commercially available for example from Croda (trade name PRIPOL 2033) or Cognis (SOVERMOL 908). Both PRIPOL 2033 and SOVERMOL 908 are highly pure, fully hydrogenated, and distilled aliphatic dimer alcohols. These products appear as colorless, clear viscous liquids. Their properties can be summarized as follows:

| | |
|---|---|
| Color (Gardner / DIN ISO 4630) | < 1 |
| OH Value (DIN 53240) | 200 - 212 mg KOH/g |
| Acid Value (ISO 660) | <= 0.2 mg KOH/g |
| Water Content (ISO 2464) | <= 0.2 % |
| Viscosity at 25°C (ISO 2555) | 1800 - 2800 mPa/s |
| Functionality | 2 |

In preferred embodiment in combination with any of the above or below embodiments, the fatty acid has from 14 to 22 carbon atoms, i.e. 14, 15, 16, 17, 18, 19, 20, 21 or 22 carbon atoms.

The term "dimer of a fatty acid and/or ester thereof" as used herein refers to the dimerisation product of mono- or polyunsaturated fatty acids and/or esters thereof.

In a preferred embodiment in combination with any of the above or below embodiments, the dimer of a fatty acid and/or ester thereof is a dimer of a fatty acid.

In another preferred embodiment in combination with any of the above or below embodiments, the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid and/or erucic acid.

Dimers of a fatty acid are commercially available. For example, dimers of oleic acid or linoleic acid are available from Croda (Gouda, The Netherlands) under the trade name PRIPOL 1009, or Cognis (Düsseldorf, Germany) under the trade names EMPOL 1008 or EMPOL 1016.

PRIPOL 1009 and EMPOL 1008 are high purity, fully hydrogenated, and distilled aliphatic dimer acids. These products appear as colorless to light colored, clear viscous liquids. Their properties can be summarized as follows:

| | |
|---|---|
| Color (Gardner / DIN ISO 4630) | < 1 |
| Acid Value (ISO 660) | 195 mg KOH/g |
| Monobasic acids (HPLC %) | max 2 % |
| Dibasic Acids (HPLC %) | min 95 % |
| Polybasic Acids (HPLC %) | 1 to 5 % |
| Viscosity at 25°C, poise (ASTM 2196) | 40 - 70 |

In another preferred embodiment in combination with any of the above or below embodiments, the dimer of a fatty acid and/or ester thereof is a dimer of a fatty acid ester.

The dimer of a fatty acid ester is obtainable by an esterification of a dimer of a fatty acid or by a dimerisation of a fatty acid ester, more preferably by an esterification of a dimer of a fatty acid.

In a preferred embodiment in combination with any of the above or below embodiments, the acid groups of the dimer of a fatty acid ester are esterified with a monohydric C₁₋₈ alcohol, more preferably methanol or ethanol.

Esterified dimers of a fatty acid are commercially available. For instance, dimethyl dimerate (i.e. a dimer of oleic and/or linoleic acids esterified with methanol) is available from Croda (Gouda, The Netherlands) under the trade name Priplast 3012. The properties of Priplast 3012 can be summarized as follows:

| | |
|---|---|
| Color (Gardner/ DIN ISO 4630) | < 3 |
| Acid Value (ISO 660) | 0 mg KOH/g |
| Monobasic acids (HPLC %) | 0.4 % |
| Dibasic Acids (HPLC %) | 97.9 % |
| Polybasic Acids (HPLC %) | 1.7 % |
| Water (%) | 0.1 |

In preferred embodiment in combination with any of the above or below embodiments, the fatty amine has from 14 to 22 carbon atoms, i.e. 14, 15, 16, 17, 18, 19, 20, 21 or 22 carbon atoms.

The term "dimer of a fatty amine" as used herein refers to the dimerisation product of mono- or polyunsaturated fatty amines. In a preferred embodiment in combination with any of the above or below embodiments, the fatty amine is preferably an amine of a fatty acid as defined herein.

Dimers of fatty amines are commercially available, for instance from Croda (Gouda, The Netherlands) under the trade name Priamine 1074. The properties of Priamine 1074 can be summarized as follows:

| | |
|---|---|
| Color (Gardner / DIN ISO 4630) | < 2 |
| Amine Value (EF926900) | 207 mg KOH/g |
| Water (%) | 0.1 |

The term "fatty isocyanate" designates a fatty acid wherein the carboxylic acid group has been replaced by an isocyanate group. In a preferred embodiment in combination with any of the above or below embodiments, the fatty isocyanate has from 14 to 22 carbon atoms, i.e. 14, 15, 16, 17, 18, 19, 20, 21 or 22 carbon atoms. The term "dimer of a fatty isocyanate" as used herein refers to the dimerisation product of mono- or polyunsaturated fatty isocyanates.

In preferred embodiment in combination with any of the above or below embodiments, the fatty isocyanate is preferably an isocyanate of a fatty acid as defined herein.

In a preferred embodiment in combination with any of the above or below embodiments, component a2) is present in a concentration of 50 wt% to 99 wt%, more preferably 65 wt% to 95 wt%, in particular 75 wt% to 90 wt%, relative to the polycondensate a).

In a preferred embodiment in combination with any of the above or below embodiments, component a) in the pressure sensitive adhesive is present in a concentration of 45 wt% to 95 wt%, more preferably 50 wt% to 90 wt%, in particular 60 wt% to 85 wt%, relative to adhesive.

It is readily apparent to a skilled person that a polycondensate will only be obtained if a1) and/or a2) contains a sufficient amount of nucleophilic groups and if a1) and/or a2) contains a sufficient amount of electrophilic groups which are capable of reacting with each other. In a preferred embodiment in combination with any of the above or below embodiments, the concentration of nucleophilic groups is from 0.5 mmol/g to 6 mmol/g, more preferably from 1 mmol/g to 3 mmol/g, and the concentration of electrophilic groups is from 0.5 mmol/g to 6 mmol/g, more preferably from 1 mmol/g to 3 mmol/g. The concentration of electrophilic/nucleophilic groups is expressed in mmol per gram of polycondensate a).

In a preferred embodiment in combination with any of the above or below embodiments, the molar ratio of component a1) to component a2) is from 2:1 to 1:2, more preferably from 1.3:1 to 1:1.3, in particular about 1:1.

In a preferred embodiment in combination with any of the above or below embodiments, the cross-linking agent has at least 2 functional groups selected from the group consisting of an isocyanate, an epoxide, an anhydride, maleimide and any combination thereof.

In a preferred embodiment in combination with any of the above or below embodiments, b) is a cross-linking agent having at least 2 isocyanate functional groups.

In another preferred embodiment in combination with any of the above or below embodiments, b) is a cross-linking agent having a structure R-(N=C=O)n, wherein R is an aliphatic, alicyclic or aromatic residue, and n is an integer ≥ 2. In a preferred embodiment in combination with any of the above or below embodiments, R is an aliphatic, alicyclic or aromatic residue containing from 10 to 40 carbon atoms. In a preferred embodiment in combination with any of the above or below embodiments, n is an integer of 2, 3, 4, 5 or 6, more preferably of 2, 3 or 4, in particular 3.

In a preferred embodiment in combination with any of the above or below embodiments, b) is selected from the group consisting of trimerized isocyanates, more preferably trimerized aliphatic isocyanates, and any combination thereof.

In another preferred embodiment in combination with any of the above or below embodiments, b) is selected from the group consisting of trimerized derivatives of MDI [4,4-methylene-di(phenyl isocyanate)], HDI [hexamethylene diisocyanate, 1,6-hexylene diisocyanate], IPDI [isophorone diisocyanate, 5-isocyanato-1-isocyanatomethyl-1,3,3-trimethylcyclohexane], and any combination thereof.

In another preferred embodiment in combination with any of the above or below embodiments, b) is selected from the group consisting of Desmodur VL 50 (MDI-based polyisocyanates, Bayer AG), Basonat F200WD (aliphatic polyisocyanate, BASF AG), Desmodur® grades N3600 and XP2410 (each from BAYER AG: aliphatic polyisocyanates, low-viscosity HDI trimers), the trimer of isophorone diisocyanate (Vestagon B 1530), hexamethylene 1,6-diisocyanate, tolulene diisocyanate, m-phenylene diisocyanate, p-phenylene diisocyanate, xylylene diisocyanate, 4,4'-diphenyl methane diisocyanate, 2,4'-diphenyl methane diisocyanate, 2,2'-diphenyl methane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3-dichloro-4,4'-biphenylene diisocyanate, 1,5-naphthalene diisocyanate, modified compounds thereof such as uretonimine-modified compounds thereof, and any combination thereof.

In a preferred embodiment in combination with any of the above or below embodiments, b) is a cross-linking agent having at least 2 epoxy functional groups.

In another preferred embodiment in combination with any of the above or below embodiments, b) is selected from the group consisting of a dimeric, oligomeric and polymeric epoxy materials containing at least 2 epoxy functional groups, and any combination thereof.

In another preferred embodiment in combination with any of the above or below embodiments, b) is selected from the group consisting of glycidyl esters.

In another preferred embodiment in combination with any of the above or below embodiments, b) is the reaction product of epichlorohydrin and p-amino phenol.

In another preferred embodiment in combination with any of the above or below embodiments, b) is the reaction product of bisphenol A and epichlorohydrin, more preferably selected from the group consisting of Ciba Geigy Araldite™ 6010, Dow Chemical DER™ 331, and Shell Chemical Epon™ 825, 828, 826, 830, 834, 836, 1001, 1004, 1007.

In another preferred embodiment in combination with any of the above or below embodiments, b) is the reaction product of phenol and formaldehyde (novolac resin) and epichlorohydrin, more preferably wherein the novolac resin is selected from the group consisting of DEN™ 431 and 438 from Dow Chemical, CY-281™ from Ciba Geigy (polyepoxidized phenol formaldehyde novolac prepolymer), ECN™ 1285, 1280 and 1299 from Ciba Geigy (polyepoxidized cresol formaldehyde novolac prepolymer).

In another preferred embodiment in combination with any of the above or below embodiments, b) is a polyglycidyl ether of polyhydric alcohol, more preferably wherein the polyhydric alcohol is butane-1,4-diol (available under the trade-name Araldite™ RD-2 from Ciba Geigy) or glycerine (available under the trade-name Epon™ 812 from Shell Chemical).

In another preferred embodiment in combination with any of the above or below embodiments, b) is a flexible epoxy resin, more preferably selected from polyglycol diepoxies (available under the trade-name DER™ 732 and 736, from Dow Chemical Company), and a diglycidyl ester of linoleic dimer acid (available under the trade-name Epon™ 871 and 872, from Shell Chemical Company).

In another preferred embodiment in combination with any of the above or below embodiments, b) is an epoxy resin having more than two functional groups, more preferably selected from the group consisting of triglycidyl isocyanurate (TGIC), N,N,N',N'- tetrakis(2-hydroxyethyl)adipamide (e.g. Primid XL 552), tetraglycidyl meta-xylenediamine (such as Erisys GA-240 from Emerald Performance Materials), a triglycidylether of p-aminophenol (e.g. Araldite™ 0500/0510 from Ciba-Geigy Corporation), N,N,N',N',-tetraglycidyl-a,a'-bis(4-aminophenyl)-p-diisopropyl-benzene, diglycidyl ether of bisphenol-9-fluorene, and N,N,N',N'-tetraglycidyl-4,4'-methylenebis-benzenamine (e.g. Araldite™ 720 from Ciba Corporation).

In another preferred embodiment in combination with any of the above or below embodiments, b) is an epoxidized triglyceride, more preferably an epoxidized triglyceride of a natural oil, in particular wherein the natural oil is selected from the group consisting of linseed oil, soybean oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil, and any combination thereof. In another preferred embodiment in combination with any of the above or below embodiments the number of epoxy groups in the epoxidized fatty acid ester is 2, 3, 4, 5 or 6, more preferably 3, 4 or 5.

Triglycerides are the main component of natural oils and are composed of three fatty acid groups connected by a glycerol centre. Epoxidized triglycerides can be found as such in nature, for instance in Vernonia plants, or can be conveniently synthesized from more common unsaturated oils by using a standard epoxidation process.

Epoxidized triglycerides are also commercially available. For example, epoxidized linseed oil (ELO) is available from Cognis (Düsseldorf, Germany) under the trade name DEHYSOL B316 SPEZIAL, or Arkema (King of Prussia, Pennsylvania) under the trade name VIKOFLEX 7190. Epoxidized soybean oil (ESBO) is commercially available from Cognis (Düsseldorf, Germany) under the trade name DEHYSOL D82, or from Arkema (King of Prussia, Pennsylvania) under the trade name VIKOFLEX 7170.

In a preferred embodiment in combination with any of the above or below embodiments, b) is a cross-linking agent having at least 2 anhydride functional groups.

In another preferred embodiment in combination with any of the above or below embodiments, b) is selected from the group consisting of a dimeric, oligomeric and polymeric anhydride materials containing at least 2 anhydride functional groups, and any combination thereof.

In another preferred embodiment in combination with any of the above or below embodiments, b) is selected from the group consisting of pyromellitic dianhydride (PMDA), 3,3',4,4'-oxydiphthalic dianhydride (ODPA), 3,3',4,4'-benzophenone tetracarboxylic dianhydride (BTDA), 3,3',4,4'-biphenyltetracarboxylic dianhydride, 1,2,3,4-cyclobutanetetracarboxylic dianhydride, 4,4'-diphthalic (hexafluoroisopropylidene) anhydride (6FDA), benzoquinonetetracarboxylic dianhydride, and ethylenetetracarboxylic dianhydride.

In another preferred embodiment in combination with any of the above or below embodiments, b) is a maleimide compound, more preferably N,N'-m-phenylene bismaleimide, bis(maleimido)ethane, 1.4-bis(maleimido)butane, or bis(maleimido)hexane.

In another preferred embodiment in combination with any of the above or below embodiments, component b) is present in a concentration of 5 wt% to 55 wt%, more preferably 10 wt% to 50 wt%, in particular 15 wt% to 40 wt%, relative to adhesive.

In a preferred embodiment in combination with any of the above or below embodiments, a1) and/or a2) further contains a diol monomer.

The term "diol monomer" as used herein refers to an aliphatic diol. In a preferred embodiment in combination with any of the above or below embodiments, the diol monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diol monomer is derived from renewable sources, in particular, selected from the group consisting of 1,3-propanediol, 1,2-propanediol or 1,4-butanediol.

In a preferred embodiment in combination with any of the above or below embodiments, a1) and/or a2) contains 0.1 mol% to 50 mol%, preferably 5 mol% to 15 mol% of the diol monomer, relative to the total amount of hydroxy-functional monomers.

In a preferred embodiment in combination with any of the above or below embodiments, a1) and/or a2) further contains a diisocyanate monomer.

The term "diisocyanate monomer" as used herein refers to an aliphatic, cyclic or aromatic diisocyanate. In a preferred embodiment in combination with any of the above or below embodiments, the diisocyanate monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diisocyanate is selected from the group consisting of hexamethylene diisocyanate and toluene diisocyanate.

In a preferred embodiment in combination with any of the above or below embodiments, a1) and/or a2) contains 0.1 mol% to 50 mol%, preferably 5 mol% to 15 mol% of the diisocyanate monomer, relative to the total amount of hydroxy-functional monomers.

In a preferred embodiment in combination with any of the above or below embodiments, a1) and/or a2) further contains glycerol. In a preferred embodiment in combination with any of the above or below embodiments a1) and/or a2) contains 0.1 mol% to 15 mol%, preferably 5 mol% to 10 mol% of glycerol. Glycerol is one of the main components of natural oils and may serve as a branching agent in the present invention.

The use of glycerol allows the enhancement of the functionality of the polymer and the facilitation of the subsequent cross-linking process.

In a preferred embodiment in combination with any of the above or below embodiments, a1) and/or a2) further contains a diamine monomer.

The term "diamine monomer" as used herein refers to an aliphatic diamine. In a preferred embodiment in combination with any of the above or below embodiments, the diamine monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms. In another preferred embodiment in combination with any of the above or below embodiments, the diamine monomer is selected from the group consisting of 1,4-diaminobutane or 1,5-diaminopentane.

In a preferred embodiment in combination with any of the above or below embodiments, a1) and/or a2) contains 0.1 mol% to 50 mol%, preferably 5 mol% to 15 mol% of the diamine monomer relative to the total amount of hydroxyl-functional monomers.

In a preferred embodiment in combination with any of the above or below embodiments, a1) and/or a2) further contains a diacid monomer.

The term "diacid monomer" as used herein refers to a saturated dicarboxylic acid. In a preferred embodiment in combination with any of the above or below embodiments, the diacid monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms.

In another preferred embodiment in combination with any of the above or below embodiments, the diacid monomer is derived from renewable sources, in particular selected from the group consisting of succinic acid, adipic acid, sebacic acid, and azelaic acid. For instance, succinic acid is produced by fermentation of sugars, and azelaic acid is obtained industrially by ozonolysis of oleic acid. Renewable azelaic acid is commercially available from Cognis (Düsseldorf, Germany) under the trade names Emerox 1110 or Emerox 1144.

In a preferred embodiment in combination with any of the above or below embodiments, a1) and/or a2) contains 0.1 mol% to 50 mol%, more preferably 10 mol% to 30 mol% of a diacid monomer.

The term "diester monomer" as used herein refers to a saturated dicarboxylic acid esterified with a monohydric C₁₋₆ alcohol, more preferably methanol or ethanol. In a preferred embodiment in combination with any of the above or below embodiments, the diester monomer has from 3 to 16 carbon atoms, i.e. 3, 4, 5, 6, 7, 8, 9, 10, 11, 12, 13, 14, 15 or 16 carbon atoms, more preferably from 4 to 11 carbon atoms, i.e. 4, 5, 6, 7, 8, 9, 10 or 11 carbon atoms.

In a preferred embodiment in combination with any of the above or below embodiments, a1) and/or a2) contains 0.1 mol% to 50 mol%, more preferably 10 mol% to 30 mol% of a diester monomer.

In a preferred embodiment in combination with any of the above or below embodiments, a1) and/or a2) further contains a trimer of a fatty acid.

The use of a trimer of a fatty acid allows the enhancement of the functionality of the polymer and the facilitation of the subsequent cross-linking process.

The term "trimer of a fatty acid" as used herein refers to the trimerisation product of mono- or polyunsaturated fatty acids and/or esters thereof.

Trimers of a fatty acid are obtainable as by-products during the dimerisation of fatty acids, for example, oleic acid or linoleic acid, and can be isolated by distillation. Such trimer acids are commercially available, for example, from Croda under the trade name PRIPOL 1006 (mixture: 95 wt% dimer acid / 5 wt% trimer acid), PRIPOL 1025 (mixture: 80 wt% dimer acid / 20 wt% trimer acid) or PRIPOL 1040 (mixture: 25 wt% dimer acid / 75 wt% trimer acid), and from Cognis (EMPOL 1045 or EMPOL 1043).

PRIPOL 1040 and EMPOL 1045 are fully hydrogenated trimer acids with a polybasic acid content of typically more than 70%, and are useful in applications where branching is desired. Their properties can be summarized as follows:

| | |
|---|---|
| Acid Value (ISO 660) | 180 - 200 mg KOH/g |
| Monobasic acids (HPLC %) | max 5% |
| Dibasic Acids (HPLC %) | 0 - 40% |
| Polybasic Acids (HPLC %) | 60 - 90% |
| Viscosity at 25°C, poise (ASTM 2196) | 200 - 500 |

In a preferred embodiment in combination with any of the above or below embodiments, a1) and/or a2) contains 1 mol% to 20 mol%, preferably 5 mol% to 15 mol% of the trimer of a fatty acid.

In a preferred embodiment in combination with any of the above or below embodiments, the polycondensate has a weight average molecular weight (Mw) of from 2,000 g/mol to 80,000 g/mol, more preferably 5,000 g/mol to 30,000 g/mol, in particular 10,000 g/mol to 20,000 g/mol. As used herein, the average molecular weights of the polymers were determined by gel permeation chromatography (GPC) instrument (Waters Model Pump 515 and Waters 2414 refractive index detector) with styragel columns relative to polystyrene (PS) standards using tetrahydrofuran (THF) as eluent.

In a preferred embodiment in combination with any of the above or below embodiments, adhesive comprises a tackifying resin, more preferably selected from the group consisting of abietic acid, an abietic acid ester, a terpene resin, a terpene/phenol resin and a hydrocarbon resin.

In a preferred embodiment in combination with any of the above or below embodiments, adhesive comprises a filler, more preferably selected from the group consisting of a silicate, talcum, calcium carbonate, clay and carbon black.

In a preferred embodiment in combination with any of the above or below embodiments, adhesive comprises a plasticizer, more preferably selected from the group consisting of a phthalate and a thixotropicizing agent. The thixotropicizing agent is preferably selected from the group consisting of bentone, pyrogenic silicas, urea derivatives, fibrillated or pulp chopped fibers. Preferably, the pulp chopped fibers are selected from the group consisting of kenaf, hemp, flax, jute, sisal, cotton and linen.

In a preferred embodiment in combination with any of the above or below embodiments, adhesive comprises a pigment. In another preferred embodiment in combination with any of the above or below embodiments, the adhesive comprises a pigment paste.

In another embodiment, the invention is directed to a method for preparing a pressure sensitive adhesive, comprising reacting in a solvent
a) a polycondensate obtainable from
   a1) a furan derivative of the following formula (I) 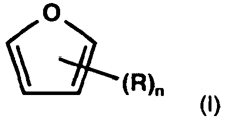 wherein
      R is -(R₁)ₓ (R₂)_{y}-R₃,
      each R₁ is independently C₁₋₈alkyl, C₂₋₈alkenyl or C₂₋₈alkynyl,
      each R₂ isindependently 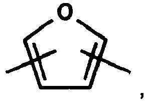
      each R₃ is independently OH, NH₂, COOH or COOR₄,
         wherein R₄ is C₁₋₈alkyl, C₂₋₈alkenyl or C₂₋₈alkynyl,
      n is 1, 2 or 3,
      each x is independently 0 or 1, and
      each y is independently 0 or 1; and
   a2) a dimer of a fatty alcohol, a dimer of a fatty acid, a dimer of a fatty amine, and/or an esterified dimer of a fatty acid; and
b) a cross-linking agent having at least 2 functional groups per molecule;
wherein a) has a Tg between -50°C and 0°C.

In a preferred embodiment in combination with any of the above or below embodiments, the polycondensate is obtainable by reacting components a1) and a2) at a temperature of 140°C to 300°C, more preferably of 220°C to 260°C, in particular at about 250°C. This temperature range allows for the formation of ester bonds from carboxylic acids and diols, but avoids a thermal degradation and discoloration of the heterobicyclic compound.

In a preferred embodiment in combination with any of the above or below embodiments, the reaction of components a1) and a2) is performed in the absence of an organic solvent.

In a preferred embodiment in combination with any of the above or below embodiments, a vacuum is applied during the polycondensation reaction in order to promote the extraction of water and to speed up the reaction. The vacuum pressure is preferably in a range of 0.1 mbar to 25 mbar, more preferably 1 mbar to 5 mbar, in particular about 1.5 mbar.

In a preferred embodiment in combination with any of the above or below embodiments, the polycondensation reaction is conducted in the presence of a polymerisation catalyst. Catalysts that may be used for the polycondensation process are well known in the art. In another preferred embodiment in combination with any of the above or below embodiments, the catalyst is selected from the group consisting of salts and oxides of Li, Ca, Mg, Mn, Zn, Pb, Sb, Sn, Ge, and Ti, and their glycol adducts, more preferably acetate salts and Ti alkoxides, even more preferably titanium(IV) n-butoxide, tin(II) octoate, butyl tin chloride dihydroxide, manganese acetate, zinc acetate, in particular titanium(IV) n-butoxide and tin(II)octoate are preferred esterification catalysts.

In a preferred embodiment in combination with any of the above or below embodiments, the catalyst is included initially with the reactants. In another preferred embodiment in combination with any of the above or below embodiments, the catalyst is added one or more times to the mixture as it is heated.

In a preferred embodiment in combination with any of the above or below embodiments, the polymerisation catalyst is used in a concentration of 0.001 to 2 wt%, more preferably 0.005 to 0.5 wt%, in particular about 0.01 wt%.

In a preferred embodiment in combination with any of the above or below embodiments, the reaction of components a1) and a2) is performed in the presence of a stabilizer. More preferably, the stabilizer is a phenolic stabilizer, in particular selected from the group consisting of Irganox 259, Irganox 1010, Irganox 1330, Irganox B900, Irganox HP2921 FF, and any combination thereof.

The same preferred reaction conditions are applicable for the polycondensation reaction if a1) and/or a2) further contains a diol monomer, a dimer of a fatty alcohol, glycerol, a diamine monomer, a dimer of a fatty amine, a diacid monomer and/or a trimer of a fatty acid.

In a preferred embodiment in combination with any of the above or below embodiments, the method for preparing the adhesive comprises reacting the polycondensate and the cross-linking agent in a solvent, wherein the solvent is an organic solvent. The solvent is preferably a hydrocarbon such toluene or xylene.

In a preferred embodiment in combination with any of the above or below embodiments, the method for preparing the adhesive comprises reacting the polycondensate and the cross-linking agent in a solvent, wherein the concentration of polycondensate and the cross-linking agent is 85 to 99 wt%.

In a preferred embodiment in combination with any of the above or below embodiments, a catalyst is used in the reaction between polycondensate and cross-linking agent. Suitable catalysts for this reaction are known in the art.

If the cross-linking agent contains isocyanate groups, a known catalyst for the preparation of polyurethane may be used. In a preferred embodiment in combination with any of the above or below embodiments, the catalyst for the reaction between the polycondensate (carboxy-terminated and/or hydroxy-terminated) and the isocyanate cross-linking agent is selected from the group consisting of divalent tin, tetravalent tin, and a tertiary amine.

In a preferred embodiment in combination with any of the above or below embodiments, the catalyst is divalent tin, more preferably selected from the group consisting of dicarboxylates of divalent tin. In particular, the catalyst is selected from the group consisting of tin(II) octoate, tin(II) phenolate, and the acetyl acetonates of divalent tin.

In a preferred embodiment in combination with any of the above or below embodiments, the catalyst is tetravalent tin, more preferably selected from the group consisting of dialkyl tin dicarboxylates and dialkoxylates. In particular, the tetravalent tin is selected from the group consisting of dibutyl tin dilaurate, dibutyl tin diacetate, dioctyl tin diacetate, dibutyl tin maleate, and the acetyl acetonates of tetravalent tin.

In a preferred embodiment in combination with any of the above or below embodiments, the catalyst is a tertiary amine. In particular, the amine is selected from the group consisting of the group consisting of 2-methylimidazole, trimethylamine, triethylamine, tetramethyl butane diamine, bis-(dimethylaminoethyl)-ether, 1,4-diazabicyclooctane (DABCO), 2,2'-dimorpholino-diethyl ether, dimethyl piperazine, and mixtures thereof.

In a preferred embodiment in combination with any of the above or below embodiments, the catalyst is an amidine. In particular, the amidine is selected from the group consisting of 1,8-diazabicyclo-(5.4.0)-undecane, 1,5-diazabicyclo[4.3.0]non-5-ene (DBN), 1,8-diazabicyclo[5.4.0]-undec-7-ene (DBU).

If the cross-linking agent contains epoxy groups, a known catalyst selected from the class of strong Lewis acids may be used. In a preferred embodiment in combination with any of the above or below embodiments, the catalyst for the reaction between a carboxy-terminated polycondensate and an epoxy cross-linking agent is selected from the group consisting of sodium carbonate and an organo metallic compound. The organo metallic compound is preferably selected from the group consisting of lithium neodecanoate, a zinc complex, tertiary amines, hexadecyltrimethylammonium bromine, and triphenyl phosphine oxide. A preferred zinc complex is commercially available from King Industries, Inc. (Norwalk, Connecticut) under the trade name NACURE XC-9206.

If the cross-linking agent contains anhydride groups, the following catalysts may be used. In a preferred embodiment in combination with any of the above or below embodiments, the catalyst for the reaction between a hydroxyl-terminated polycondensate and an anhydride cross-linking agent is selected from the group consisting of a tertiary amine, p-toluene sulfonic acid, dodecylbenzene sulfonic acid, methane sulfonic acid, amidines such as 1,8-diazabicyclo-[5.4.0]undec-7-ene (DBU), and guanidines such as 1,5,7-triazabicyclo[4.4.0]dec-5-ene (TBD). The tertiary amine is preferably 2-methylimidazole.

In another preferred embodiment in combination with any of the above or below embodiments, the method for preparing the adhesive comprises reacting the polycondensate and the cross-linking agent in a solvent, and using said reaction mixture as a coating solution. In another preferred embodiment in combination with any of the above or below embodiments, said coating solution is laminated on a sheet or a film.

In another embodiment, the invention is directed to the use of the adhesive for laminating a sheet or a film.

In a preferred embodiment in combination with any of the above or below embodiments, the adhesive layer has a thickness of 5 µm to 100 µm, more preferably 15 µm to 40 µm.

In another preferred embodiment in combination with any of the above or below embodiments, the sheet or film is fossil-based or bio-based. It is possible to obtain a fully bio-based tape structure by laminating a bio-based adhesive onto a bio-based carrier film.

In another preferred embodiment in combination with any of the above or below embodiments, the sheet or film is fossil-based. The fossil-based plastic sheet or film is preferably made from poly(ethylene terephthalate) (PET), polyethylene (PE), polyvinyl chloride (PVC), and/or polypropylene (PP).

In another preferred embodiment in combination with any of the above or below embodiments, the sheet or film is bio-based. The bioplastic sheet or film is preferably made from cellulose, starch, and/or polylactic acid (PLA).

In another preferred embodiment in combination with any of the above or below embodiments, the sheet or film is made from poly(ethylene terephthalate), polyethylene, polypropylene, cellulose, starch and/or polylactic acid.

Cellulose-based films are commercially available, for example, from Innovia Films under the trade name NatureFlex. Polylactic acid-based films are commercially available, for example, from Nordenia Technologies. Preferably, a modified-PLA film with enhanced temperature resistance is used.

In a preferred embodiment of the pressure sensitive adhesive in combination with any of the above or below embodiments, the polycondensate has a glass transition temperature (Tg) of less than or equal to -10°C.

In a preferred embodiment of the pressure sensitive adhesive in combination with any of the above or below embodiments, the adhesive has a glass transition temperature (Tg) of less than or equal to 0°C.

As used herein, the glass transition temperature is determined using Differential Scanning Calorimetry. For the DSC analysis, the samples were first cooled to -100°C and then heated up to 50°C (heating ramp + 10°C/min) in a nitrogen atmosphere. DSC measurements were carried out on a Mettler DSC 30 equipped with a liquid nitrogen system. The DSC cell was purged with 50 ml/min of nitrogen. Data analysis has been carried out on the second heating ramp at a speed of 5°C/min.

In a preferred embodiment in combination with any of the above or below embodiments, the adhesive has a number of free carboxylic acid groups in the range of 1 to 50 mg KOH/g and a number of free hydroxyl groups in the range of 1 to 50 mg KOH/g. The acid value is defined as the number of mg of potassium hydroxide required to neutralize the free fatty acids in 1 g of sample, and was measured by direct titration with a standard potassium hydroxide solution. The hydroxyl value is defined as the number of mg of potassium hydroxide equivalent to the hydroxyl content of 1 g of sample, and is measured by acetylation followed by hydrolysation of excess acetic anhydride. The acetic acid formed is subsequently titrated with an ethanolic potassium hydroxide solution.

Depending on the selection and concentration of components a) and b), the adhesion strength can be adjusted to be in the range of 10 to 2,000 cN/200mm for use in various industrial applications, such as temporary surface protection or permanent bonding. For instance, the adhesion force used can be adjusted to be moderate, preferably below 100 cN/20mm, for temporal surface protection or the adhesion force can be adjusted to be high, preferably from 500 to 2,000 cN/20mm, for permanent bonding and joining applications.

In general, the adhesion strength is higher when the degree of cross-linking is lower and the adhesion strength is lower when the degree of cross-linking is higher.

Incorporation of the furanic moiety in the polymer backbone allows the modification of the glass transition temperature (Tg) of the adhesive and, hence, the tuning of the visco-elastic properties of the adhesive. The furanic moiety is a polar compound strongly interacting with surfaces. Consequently, the furanic-based adhesives display good adhesion on a variety of surfaces, in particular on polar substrates. The furanic-based adhesive allows for the formation of hydrogen bonds leading to good cohesion of the adhesive. Additionally, the furanic-based adhesive shows a high biodegradability, in particular, if the furanic monomer is 2,5-furandicarboxylic acid dimethyl ester.

The adhesive (or adhesion) strength can be measured by a 180°C peel test. This type of testing determines the force that is necessary to tear a strip of a tape from a standard surface at a constant speed. The result is the force referred to the width of the tape. Samples for the peel test were prepared as follows. At first, an adhesive composition is coated on a carrier film (for instance, PET) and cured as described in Examples 8 to 10. Then, 2 cm-wide, 10 cm-long stripes of adhesive tape are cut and placed on a table (the adhesive face on top). Half of the tape length is then covered with a second strip of plastic film (this film should be identical to the carrier film on which the adhesive composition has been previously coated). Then, this assembly is turned upside down and the free adhesive domain is applied manually on the reference surface (for instance, BA steel). A two kg cylinder is rolled twice on the tape in order to ensure good contact between the adhesive and the reference surface. A dwell time of 15 minutes is observed prior to performing the peeling test. The peel test is performed on a Zwick Z005 testing machine with a constant peeling speed of 300 mm/min.

In a preferred embodiment in combination with any of the above or below embodiments, the adhesive is used as a pressure sensitive adhesive (PSA) or as a hot-melt adhesive.

In summary, the adhesive of the present invention shows good adhesive properties, superior transparency and biodegradability.

The following examples further describe the invention.

### EXAMPLES

### Example 1 Synthesis of a bio-based polyester containing a furan monomer and a dimer of fatty alcohol

A polytransesterification was carried out according to the following procedure. PRIPOL 2033 (77.42g; 143.69 mmol) and dimethyl-2,5-furandicarboxylate (DMF) (22.58 g; 122.62 mmol) were weighed into a 250 ml cylindrical glass-reactor equipped with a mechanical stirrer, a gas inlet, a Dean-Stark type condenser and an Allihn reflux condenser. The mixture was homogenized at room temperature by stirring and then the catalyst titanium tetrabutoxide (25.0 mg) dissolved in a small portion of toluene was introduced in the reaction vessel. The temperature was increased in slow steps until 170°C, using an oil bath, until no condensing methanol was observed. Then, the gas inlet was stopped and vacuum pressure (in the range of 5-10 mbar) was applied and the temperature increased in steps until 210°C, for less than one hour and then the ensuing polymer was mechanically removed from the reactor. The resultant polyester had a glass transition (Tg) of -20°C, a weight average molecular weight (Mw) of 12,080 g/mol, a number average molecular weight of 5,642 g/mol, a polydispersity index of 2.14, a hydroxyl value of 36.3 mg KOH/g.

### Example 2 Pressure sensitive adhesive composition cross-linked with an isocyanate compound

4.75g of polymer of Example 1 were mixed with 1.25 g of toluene to reduce the viscosity and then 0.25 g of a trimerized HDI (DESMODUR N3600) was added. The weight percent of crosslinker in the formulation was 5 wt%, relative to the polymer weight. The mixture was homogenized and immediately manually roll-coated at room temperature onto a 90 µm adhesive layer (wet thickness) on a 50 µm thick polyethylene terephthalate (PET) film. The bilayer was dried and cured in an oven at 130°C for 5 minutes. The adhesive layer was coated with a release liner. The dry thickness of the adhesive layer was 19 µm.

The adhesion to BA Steel panels was measured with the 180° peel method after double rolling of a two kg cylinder on the tape with a dwell time of 15 min. The tape width was 20 mm and the tests were performed thrice. The adhesive strength from BA Steel panel for this particular tape was 280 cN/20mm.

### Example 3 Effect of the weight fraction of the isocyanate compound on the adhesion strength

Example 2 was repeated by varying the polymer/cross-linker weight ratio. The adhesives were prepared with 3.2, 3.5 and 10 wt% of DESMODUR N3600. The adhesive strength from BA Steel panel was 1048, 615 and 630cN/20mm, respectively.

## Claims

1. A pressure sensitive adhesive obtainable by reacting
a) a polycondensate obtainable from
a1) a furan derivative of the following formula (I) 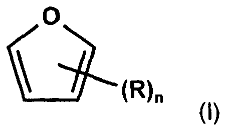 wherein
R is -(R₁)ₓ-(R₂)_{y}-R₃,
each R₁ is independently C₁₋₈alkyl, C₂₋₈alkenyl or C₂₋₈alkynyl,
each R₂ is independently 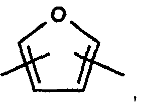
each R₃ is independently OH, NH₂, COOH or COOR₄,
wherein R₄ is C₁₋₈alkyl, C₂₋₈alkenyl or C₂₋₈alkynyl,
n is 1, 2 or 3,
each x is independently 0 or 1, and
each y is independently 0 or 1; and
a2) a dimer of a fatty alcohol, a dimer of a fatty acid and/or ester thereof, a dimer of a fatty amine, and/or a dimer of a fatty isocyanate;
wherein the polycondensate has a Tg between -50°C and 0°C; and
b) a cross-linking agent having at least 2 functional groups per molecule.

2. The adhesive of claim 1, wherein the furan derivative of formula (I) has the following structure of formula (II)

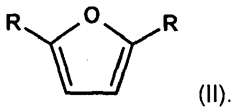

3. The adhesive of claim 2, wherein the furan derivative of formula (II) is a 2,5-furandicarboxylic acid dialkyl ester, 2,5-furandicarboxylic acid, 2,5-bis(hydroxy-methyl)furan, 2,5-bis(aminomethyl)furan, 5-hydroxymethyl furoic acid, and/or 2-aminoethyl-5-hydroxy-methyl furan.

4. The adhesive of or any of claims claim 1 to 3, wherein a1) and/or a2) further contains a diacid monomer, a diester monomer, a diol monomer, a diisocyanate monomer and/or a diamine monomer.

5. The adhesive of any of claims 1 to 4, wherein the fatty alcohol, the fatty acid and/or the fatty amine has from 14 to 22 carbon atoms.

6. The adhesive of any of claims 1 to 5, wherein the dimer of a fatty alcohol is obtainable by hydrogenation of a dimer of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid, and/or erucic acid.

7. The adhesive of any of claims 1 to 6, wherein the fatty acid has from 18 to 22 carbon atoms.

8. The adhesive of any of claims 1 to 7, wherein the fatty acid is selected from the group consisting of oleic acid, linoleic acid, palmitoleic acid, linolenic acid, eleostearic acid, ricinoleic acid, vernolic acid, licanic acid, myristoleic acid, margaroleic acid, gadoleic acid, eicosadienoic acid, and/or erucic acid.

9. The adhesive of claim 4, wherein the diacid monomer is a saturated hydrocarbon dicarboxylic acid containing 3 to 16 carbon atoms.

10. The adhesive of any of claims 1 to 9, wherein the cross-linking agent is selected from the group consisting of an isocyanate, epoxide, anhydride, and maleimide.

11. A method for preparing the adhesive of any of claims 1 to 10, comprising reacting in a solvent
a) a polycondensate obtainable from
a1) a furan derivative of the following formula (I) 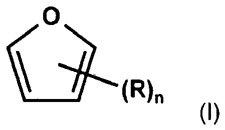 wherein
R is -(R₁)ₓ-(R₂)_{y}-R₃,
each R₁ is independently C₁₋₈alkyl, C₂₋₈alkenyl or C₂₋₈alkynyl,
each R₂ is independently 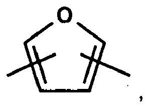
each R₃ is independently OH, NH₂, COOH or COOR₄,
wherein R₄ is C₁₋₈alkyl, C₂₋₈alkenyl or C₂₋₈alkynyl,
n is 1, 2 or 3,
each x is independently 0 or 1, and
each y is independently 0 or 1; and
a2) a dimer of a fatty alcohol, a dimer of a fatty acid, a dimer of a fatty amine, and/or an esterified dimer of a fatty acid; and
b) a cross-linking agent having at least 2 functional groups per molecule;
wherein a) has a Tg between -50°C and 0°C.

12. Use of the adhesive according to any of claims 1 to 10 for laminating a sheet or film.

## Patentansprüche

1. Haftkleber, erhältlich durch Umsetzung von
a) einem Polykondensat, erhältlich aus
a1) einem Furanderivat der folgenden Formel (I) 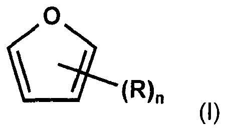 wobei
R -(R₁)ₓ-(R₂)_{y}-R₃ ist,
jedes R₁ unabhängig voneinander C₁₋ₐAlkyl, C₂₋₈Alkenyl oder C₂₋₈Alkinyl ist,
jedes R₂ unabhängig voneinander 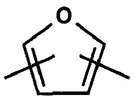 ist,
jedes R₃ unabhängig voneinander OH, NH₂, COOH oder COOR₄ ist,
wobei R₄ C₁₋₈Alkyl, C₂₋₈Alkenyl oder C₂₋₈Alkinyl ist,
n 1, 2 oder 3 ist,
jedes x unabhängig voneinander 0 oder 1 ist, und
jedes y unabhängig voneinander 0 oder 1 ist; und
a2) einem Dimer eines Fettalkohols, einem Dimer einer Fettsäure und/oder Ester derselben, einem Dimer eines Fettamins, und/oder einem Dimer eines Fettisocyanats;
wobei das Polykondensat einen Tg zwischen -50°C und 0°C hat; und
b) einem Vernetzer mit mindestens 2 funktionellen Gruppen pro Molekül.

2. Kleber nach of Anspruch 1, wobei das Furanderivat der Formel (I) die folgende Struktur der Formel (II) hat

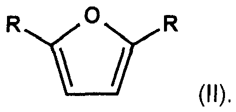

3. Kleber nach of Anspruch 2, wobei das Furanderivat der Formel (II) ein 2,5-Furandicarbonsäuredialkylester, 2,5-Furandicarbonsäure, 2,5-Bis(hydroxymethyl)furan, 2,5-Bis(aminomethyl)furan, 5-Hydroxymethylfuroesäure, und/oder 2-Aminoethyl-5-hydroxymethyl-furan ist.

4. Kleber nach einem der Ansprüche 1 bis 3, wobei a1) und/oder a2) weiterhin ein Disäuremonomer, ein Diestermonomer, ein Diolmonomer, ein Diisocyanatmonomer und/oder ein Diaminmonomer enthält.

5. Kleber nach einem der Ansprüche 1 bis 4, wobei der Fettalkohol, die Fettsäure und/oder das Fettamin 14 bis 22 Kohlenstoffatome aufweist.

6. Kleber nach einem der Ansprüche 1 bis 5, wobei das Dimer eines Fettalkohols erhältlich ist durch Hydrierung eines Dimers von Ölsäure, Linolsäure, Palmitoleinsäure, Linolensäure, Elaeostearinsäure, Ricinolsäure, Vernolsäure, Licansäure, Myristoleinsäure, Margaroleinsäure, Gadoleinsäure, Eicosadiensäure, und/oder Erucasäure.

7. Kleber nach einem der Ansprüche 1 bis 6, wobei die Fettsäure 18 bis 22 Kohlenstoffatome aufweist.

8. Kleber nach einem der Ansprüche 1 bis 7, wobei die Fettsäure ausgewählt ist aus der Gruppe, bestehend aus Ölsäure, Linolsäure, Palmitoleinsäure, Linolensäure, Eleostearinsäure, Ricinolsäure, Vernolsäure, Licansäure, Myristoleinsäure, Margaroleinsäure, Gadoleinsäure, Eicosadiensäure, und/oder Erucasäure.

9. Kleber nach Anspruch 4, wobei das Disäuremonomer eine gesättigte Kohlenwasserstoffdicarbonsäure ist, die 3 bis 16 Kohlenstoffatome enthält.

10. Kleber nach einem der Ansprüche 1 bis 9, wobei der Vernetzer ausgewählt ist aus der Gruppe, bestehend aus einem Isocyanat, Epoxid, Anhydrid und Maleimid.

11. Verfahren zur Herstellung des Klebers nach einem der Ansprüche 1 bis 10, umfassend die Umsetzung in einem Lösungsmittel von
a) einem Polykondensat, erhältlich aus
a1) einem Furanderivat der folgenden Formel (I) 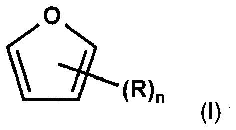 wobei
R -(R₁)ₓ-(R₂)_{y}-R₃ ist,
jedes R₁ unabhängig voneinander C₁₋₈Alkyl, C₂₋₈Alkenyl oder C₂₋₈Alkinyl ist,
jedes R₂ unabhängig voneinander 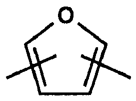 ist,
jedes R₃ unabhängig voneinander OH, NH₂, COOH oder COOR₄ ist,
wobei R₄ C₁₋₈Alkyl, C₂₋₈Alkenyl oder C₂₋₈Alkinyl ist,
n 1, 2 oder 3 ist,
jedes x unabhängig voneinander 0 oder 1 ist, und
jedes y unabhängig voneinander 0 oder 1 ist; und
a2) einem Dimer eines Fettalkohols, einem Dimer einer Fettsäure, einem Dimer eines Fettamins, und/oder einem veresterten Dimer einer Fettsäure; und
b) einem Vernetzer mit mindestens 2 funktionellen Gruppen pro Molekül;
wobei a) einen Tg zwischen -50°C und 0°C hat.

12. Verwendung des Klebers nach einem der Ansprüche 1 bis 10 zur Laminierung einer Folie oder eines Films.

## Revendications

1. Adhésif sensible à la pression pouvant être obtenu en faisant réagir
a) un polycondensat pouvant être obtenu à partir de
a1) un dérivé de furane de formule (I) suivante 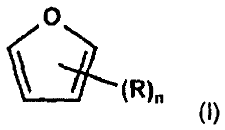 dans laquelle
R is -(R₁)ₓ-(R₂)_{y}-R₃,
chaque R₁ est indépendamment un alkyle en C₁₋₈, alcényle en C₂₋₈ ou alcynyle en C₂₋₈,
chaque R₂ est indépendamment 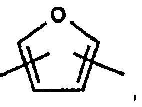
chaque R₃ est indépendamment OH, NH₂, COOH ou COOR₄,
R₄ étant un alkyle en C₁₋₈, alcényle en C₂₋₈ ou alcynyle en C₂₋₈,
n vaut 1, 2 ou 3,
chaque x vaut indépendamment 0 ou 1, et
chaque y vaut indépendamment 0 ou 1 ; et
a2) un dimère d'un alcool gras, un dimère d'un acide gras et/ou ester de celui-ci, un dimère d'une amine grasse, et/ou un dimère d'un isocyanate gras ;
où le polycondensat a une Tg comprise entre -50 °C et 0 °C ; et
b) un agent réticulant ayant au moins 2 groupes fonctionnels par molécule.

2. Adhésif de la revendication 1, dans lequel le dérivé de furane de formule (I) a la structure suivante de formule (II)

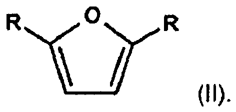

3. Adhésif de la revendication 2, dans lequel le dérivé de furane de formule (II) est un ester dialkylique de l'acide 2,5-furanedicarboxylique, acide 2,5-furanedicarboxylique, 2,5-bis(hydroxyméthyl)furane, 2,5-bis(aminométhyl)furane, acide 5-hydroxyméthylfuroïque, et/ou 2-aminoéthyl-5-hydroxyméthylfurane.

4. Adhésif de n'importe lesquelles des revendications 1 à 3, dans lequel a1) et/ou a2) contiennent en outre un monomère diacide, un monomère diester, un monomère diol, un monomère diisocyanate et/ou un monomère diamine.

5. Adhésif de n'importe lesquelles des revendications 1 à 4, dans lequel l'alcool gras, l'acide gras et/ou l'amine grasse possèdent 14 à 22 atomes de carbone.

6. Adhésif de n'importe lesquelles des revendications 1 à 5, dans lequel le dimère d'un alcool gras peut être obtenu par hydrogénation d'un dimère d'acide oléique, d'acide linoléique, d'acide palmitoléique, d'acide linolénique, d'acide éléostéarique, d'acide ricinoléique, d'acide vernolique, d'acide licanique, d'acide myristoléique, d'acide margaroléique, d'acide gadoléique, d'acide éicosadiénoïque, et/ou d'acide érucique.

7. Adhésif de n'importe lesquelles des revendications 1 à 6, dans lequel l'acide gras possède 18 à 22 atomes de carbone.

8. Adhésif de n'importe lesquelles des revendications 1 à 7, dans lequel l'acide gras est choisi dans le groupe constitué par l'acide oléique, l'acide linoléique, l'acide palmitoléique, l'acide linolénique, l'acide éléostéarique, l'acide ricinoléique, l'acide vernolique, l'acide licanique, l'acide myristoléique, l'acide margaroléique, l'acide gadoléique, l'acide éicosadiénoïque, et/ou l'acide érucique.

9. Adhésif de la revendication 4, dans lequel le monomère diacide est un acide dicarboxylique hydrocarboné saturé contenant 3 à 16 atomes de carbone.

10. Adhésif de n'importe lesquelles des revendications 1 à 9, dans lequel l'agent réticulant est choisi dans le groupe constitué par un isocyanate, époxyde, anhydride, et maléimide.

11. Procédé de préparation de l'adhésif de n'importe lesquelles des revendications 1 à 10, comprenant la mise en réaction dans un solvant de
a) un polycondensat pouvant être obtenu à partir de
a1) un dérivé de furane de formule (I) suivante 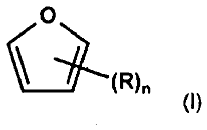 dans laquelle
R is -(R₁)ₓ-(R₂)_{y}-R₃,
chaque R₁ est indépendamment un alkyle en C₁₋₈, alcényle en C₂₋₈ ou alcynyle en C₂₋₈,
chaque R₂ est indépendamment 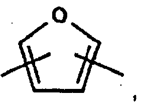
chaque R₃ est indépendamment OH, NH₂, COOH ou COOR₄,
R₄ étant un alkyle en C₁₋₈, alcényle en C₂₋₈ ou alcynyle en C₂₋₈,
n vaut 1, 2 ou 3,
chaque x vaut indépendamment 0 ou 1, et
chaque y vaut indépendamment 0 ou 1 ; et
a2) un dimère d'un alcool gras, un dimère d'un acide gras, un dimère d'une amine grasse, et/ou un dimère estérifié d'un acide gras ; et
b) un agent réticulant ayant au moins 2 groupes fonctionnels par molécule ; où a) a une Tg comprise entre -50 °C et 0 °C.

12. Utilisation de l'adhésif selon n'importe lesquelles des revendications 1 à 10 pour stratifier une feuille ou un film.
